# EUROPÄISCHE PATENTSCHRIFT

(11) **EP 3 162 753 B1**
(45) Veröffentlichungstag und Bekanntmachung des Hinweises auf die Patenterteilung: **24.11.2021**
(21) Anmeldenummer: 16190388.5
(22) Anmeldetag: 23.09.2016
(51) Int. Cl.: B66F 9/075

(54) **ENERGIEVERSORGUNGSEINHEIT EINES ZUSATZGERÄTES AN EINER LASTAUFNAHMEVORRICHTUNG EINES FLURFÖRDERZEUGS**
ENERGY SUPPLY UNIT FOR ADDITIONAL DEVICES ON LOAD BEARING EQUIPMENT OF AN INDUSTRIAL TRUCK
UNITE D'ALIMENTATION EN ENERGIE POUR DES APPAREILS AUXILIAIRES SUR UN DISPOSITIF DE RECEPTION DE CHARGE D'UN CHARIOT DE MANUTENTION

(30) Priorität: 30.10.2015 DE 102015118637
(43) Veröffentlichungstag der Anmeldung: 03.05.2017
(73) Patentinhaber: STILL GmbH, 22113 Hamburg (DE)
(72) Erfinder: Haake, Kai, 21073 Hamburg (DE)
(74) Vertreter: Patentship Patentanwaltsgesellschaft mbH

(56) Entgegenhaltungen:
- US-A- 3 202 233
- US-A- 4 794 058
- US-A1- 2006 255 954
- US-A1- 2012 060 383

## Beschreibung

Die Erfindung betrifft eine Energieversorgungseinheit eines Zusatzgerätes an einer Lastaufnahmevorrichtung eines Flurförderzeugs. Insbesondere betrifft die Erfindung eine Energieversorgungseinheit nach dem Oberbegriff des Patentanspruchs 1.

Flurförderzeuge, die Lasten mithilfe einer Lastgabel als Lastaufnahmevorrichtung handhaben, sind beispielsweise Gegengewichtsgabelstapler oder Schubmaststapler, aber auch Hochhub-Gabelhubwagen. Die Lastaufnahmevorrichtung ist dabei im Regelfall so aufgebaut, dass an einem Gabelträger zwei Gabelzinken eingehängt sind, deren Abstand zueinander durch die Position auf dem Gabelträger eingestellt werden kann. Der Gabelträger besteht aus einem oberen Querträger, in den die Gabelzinken mit Haken eingehängt sind und einem unteren Querträger, gegen den sich die Gabelzinken abstützen und an dem diese im Regelfall durch einen zweiten Gegenhaken befestigt sind. Der obere Querträger und der unteren Querträger sind an ihrer Rückseite durch senkrechte Träger verbunden, die zumeist zugleich zur Führung des Lastträgers in dem Hubmast dienen. Zwischen dem oberen Querträger und dem unteren Querträger ergeben sich dabei häufig Freiräume.

Der Gabelträger wird an dem Hubmast höhenbeweglich geführt, wobei zumeist eine hydraulische Hubvorrichtung zum Einsatz kommt. Bei größeren Hubhöhen erfolgt dabei nicht nur eine Bewegung an einem Mastelement, sondern ist der Hubmast selbst in mehreren Stufen mit weiteren Mastschüssen ausfahrbar.

Es sind Zusatz- und Assistenzsysteme bekannt, die an dem Gabelträger und insbesondere an der Lastgabel selbst eingesetzt werden, beispielsweise durch Integration in einen aufgesetzten Gabelschuh. Dies können beispielsweise Scheinwerfer, Sensoren für Lastgewicht, Neigung etc., Kameras und die Umgebung scannende Lasersysteme, Sensoren für Anpress-Drücke bei Greifelementen als Zusatzausstattung, Auto-Identifizierungssysteme für Anbaugeräte und Sende- sowie Empfangseinrichtungen sein, beispielsweise für RFID-basierte Steuerungsfunktionen oder Warenwirtschaftssysteme. Dabei ist es zunehmend der Fall, dass mehrere dieser Systeme kombiniert zum Einsatz kommen. Alle diese Systeme brauchen eine Energieversorgung. Weiterhin ist es auch bei einer Vielzahl von ihnen erforderlich, dass eine Datenverbindung mit den Systemen des Flurförderzeugs hergestellt werden kann.

Die Verlegung von elektrischen Leitungen durch den Hubmast ist jedoch aufgrund der räumlichen Situation und der starken Bewegung der Hubmastelemente untereinander und insbesondere des Gabelträgers gegenüber dem Hubmast schwierig. Dies gilt insbesondere für Datenkabel, die eine hohe Datenübertragungsgeschwindigkeit besitzen und deshalb enge Anforderungen an Leitungsgeometrie und Abschirmung aufweisen. Der Aufwand wird insbesondere bei einer Nachrüstung sehr schwierig, wenn für eine Verkabelung gegebenenfalls der gesamte Hubmast demontiert werden müsste.

Bekannt ist bereits bei einigen Systemen zum Beispiel Wiege-Gabeln, dass diese eine integrierte Funkverbindung zu Systemen des Flurförderzeug aufweisen und auch eine integrierte Energieversorgung in Form eines Akkus.

Nachteilig an diesem Stand der Technik ist jedoch, dass mehrere Funkverbindungen und Sende-/Empfangsanlagen nebeneinander zum einen schwer zu überwachen und zu warten sind sowie sich auch eventuell stören können. Schließlich ist es sehr aufwendig bei mehreren solchen Systemen dies alles nachzurüsten, wenn nicht bereits das Flurförderzeug serienmäßig damit ausgestattet ist. Eine Mehrzahl von Akkus und Energieversorgung in ist auch aufwendig aufzuladen bzw. es muss jedem Fahrer bekannt sein, an welchen Stellen welche Akkus zu wechseln sind, um die Funktion der Systeme sicherzustellen.

Es ist bereits bekannt im Stand der Technik, eine Energieversorgung vorzusehen, die mit dem Gabelträger mitbewegt wird und über Schleifkontakte zumindest in einer bestimmten Hubhöhe nachgeladen wird. Eine entsprechende Energieversorgungseinheit wird offenbart in der DE 199 03 160 C2. Nachteilig an diesem Stand der Technik ist jedoch, dass die Energieversorgungseinheit fest in den Gabelträger eingebaut und integriert ist, wobei sie allein zur Versorgung von hydraulischen Zusatzvorrichtungen dient. Es ist keine leichte Nachrüstbarkeit möglich und auch keine leichte Austauschbarkeit, um beispielsweise einen entladenen Akku gegen einen aufgeladenen auszutauschen.

Die US 2006/255954 A1 offenbart sämtliche Merkmale im Oberbegriff des unabhängigen Anspruchs 1.

Aus der US 2012/060383 A1 ist ein Leitsystem für einen Gabelstapler bekannt, das sichtbares Licht verwendet, um einem Gabelstaplerbetreiber visuelle Anzeigen zu geben, welche die Lage der Gabel auf dem Gabelstapler relativ zu Zugangsöffnungen in einer Palette angeben.

Der vorliegenden Erfindung liegt die Aufgabe zugrunde, eine Energieversorgungseinheit eines Zusatzgerätes an einer Lastaufnahmevorrichtung eines Flurförderzeug zur Verfügung zu stellen, dass die zuvor genannten Nachteile vermeidet und das leicht bei einer Vielzahl von verschiedenen Flurförderzeugen nachrüstbar ist sowie mit einer Mehrzahl von Zusatzgeräten kombiniert werden kann. Diese Aufgabe wird durch eine Energieversorgungseinheit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß gelöst durch eine Energieversorgungseinheit eines Zusatzgerätes an einer Lastaufnahmevorrichtung eines Flurförderzeugs, wobei die Lastaufnahmevorrichtung einen Gabelträger mit einem oberen Querträger zum Einhängen von Gabelzinken umfasst und die Energieversorgungseinheit einen Energiespeicher an einem Trägerelement aufweist, das Trägerelement an einem oberen Ende einen ersten Hakenbereich aufweist, mit dem es an dem oberen Querträger eingehängt werden kann. Das Trägerelement weist eine, in der Einbauposition einer Last zugewandte, Schutzplatte auf, zum Verhindern, dass die Energieversorgungseinheit oder Teile einer Elektronik durch die Last beschädigt werden.

Die Schutzplatte kann im Sinn einer Panzerplatte gegen Durchdringung und Schlag schützen und somit verhindern, dass die Energieversorgungseinheit oder Teile einer Elektronik durch eine Last beschädigt werden können. Dabei ist das Trägerelement nach vorne in Richtung auf die Last zusammen mit der Schutzplatte orientiert, sodass die eigentliche Energieversorgungseinheit bzw. der Energiespeicher und eventuelle Elektronik dahinter angeordnet ist. Zugleich ergibt sich dadurch vorteilhaft die Situation, dass bei der Verwendung von Sende- und Empfangsvorrichtungen der Bereich in Richtung auf eine Fahrerkabine offen ist und nicht gestört wird durch Metallbleche oder ähnliches.

Neben den Gabelzinken verbleibt über die Länge des oberen Querträgers des Gabelträgers ausreichend Platz, um die Energieversorgungseinheit einzuhängen. Dabei kann diese den Platz unterhalb des oberen Querträgers in dem Gabelträger einnehmen, in dem sich regelmäßig Freiräume ergeben. Bei den an der Lastaufnahmevorrichtung montierten Zusatzgeräten kann es sich um alle Arten von elektronischen oder auch Lasthandhabungs-Zusatzgeräten handeln, wie Kameras, Kommunikationsmittel, Sensoren etc. Insbesondere können die Zusatzgeräte auch an anderen Stellen, als dem Gabelträger und im übrigen Bereich der Lastaufnahmevorrichtung montiert sein, wie etwa in den Gabelzinken oder auch in einem auf den Gabelzinken aufgesetzten Gabelschuh. Alle Zusatzgeräte können über ein Stromversorgungskabel mit Energieversorgungseinheit verbunden sein. Die Energieversorgungseinheit selbst kann sehr leicht ausgewechselt werden gegen eine neue, voll aufgeladene, wenn diese entladen ist. Alternativ ist es auch möglich, dass die Energieversorgungseinheit in den Gabelträger verbleiben aufgeladen wird. Die erfindungsgemäße Energieversorgungseinheit ist leicht nachrüstbar bei einer Vielzahl von Flurförderzeugen, da die Form des Querträgers zum Einhängen der Gabelzinken für eine Vielzahl von Flurförderzeugen gleich ist. Bei dem Energiespeicher der Energieversorgungseinheit kann es sich beispielsweise um einen Lithium-Polymer-, einen Lithium-lonenakku oder einen sonstigen modernen Akku hoher Energiedichte handeln. Zur Verfügung gestellt werden kann etwa eine Standardspannung wie etwa 12 V oder 24 V.

Das Trägerelement kann an seinem unteren Ende einen zweiten Hakenbereich aufweisen, mit dem es in einem unteren Querträger des Gabelträgers eingespannt werden kann.

Gleich einer Gabelzinke kann somit die Energieversorgungseinheit an dem Gabelträger gesichert werden und an dem oberen Querträger wie auch unteren Querträger eingespannt werden.

Vorteilhaft kann das Trägerelement in seiner Länge zwischen erstem Hakenbereich und zweiten Hakenbereich eingestellt werden.

Damit ist eine leichte Nachrüstbarkeit und flexible Anpassung an eine Vielzahl von Flurförderzeuge mit unterschiedlichen Abständen zwischen unterem Querträger und oberen Querträger möglich. Auch kann die Montage und Demontage sehr einfach gestaltet werden, wenn die Verstellung der Länge leicht durchführbar, die Fixierung der Längeneinstellung leicht lösbar und umgekehrt auch wieder leicht fixierbar ist. Die Energieversorgungseinheit lässt sich dann leicht abnehmen und auch wieder Aufsetzen auf den Gabelträger.

In einer günstigen Ausgestaltung nimmt die Energieversorgungseinheit mit dem Trägerelement ungefähr die Breite des ersten Querträgers ein.

Dann nutzt die Energieversorgungseinheit vorhandenen Bauraum an dem Gabelträger und durch die äußeren Abmessungen befindet sie sich in einem geschützten Bereich. Zusätzlich wirkt die Dicke der Gabelzinkenrücken in Richtung auf die Last als zusätzlicher Schutz gegen Beschädigungen durch eine vorstehende Last.

Es können im ersten Hakenbereich und/oder zweiten Hakenbereich Spannschrauben angeordnet sein.

Diese sind so angeordnet, dass sie hinter den Querträger so weit greifen, um den Hakenbereich auf diesem festspannen zu können.

Es können im ersten Hakenbereich und/oder zweiten Hakenbereich Arretierungselemente für Einrastpunkte der Gabelzinken in dem Querträger vorgesehen sein, insbesondere Schrauben.

Die Arretierungselemente bzw. Schrauben greifen dabei in die Ausnehmungen, die zur Fixierung und seitlichen Festlegung der Gabelzinken vorgesehen sind. Dies verhindert ein seitliches Verrutschen und sichert die Energieversorgungseinheit beispielsweise gegen Fliehkräfte bei Kurvenfahrt.

Es können vorteilhaft auf der dem Trägerelement abgewandten Seite Steckverbindungen angeordnet sein.

Die Energieversorgungseinheit kann eine Sende- und Empfangsvorrichtung für eine drahtlose Datenverbindung aufweisen und ein Datenbussystem für Zusatzgeräte.

Neben einer gemeinsamen Stromversorgung für die Zusatzgeräte kann somit auch eine gemeinsame Datenkommunikation angeboten werden, durch die eine Datenkabelleitung durch den Hubmast vermieden werden kann. Eine drahtlose Funkverbindung kann die Datenkommunikation mit dem Flurförderzeug selbst, aber auch mit beispielsweise einem Terminal im Bereich der Fahrerkabine herstellen. Auch hier sind die Zusatzgeräte über Datenleitungen mit der Energieversorgungseinheit verbunden und können beispielsweise über ein zur Verfügung gestelltes gemeinsames Bussystem Daten austauschen, die über die Sende- und Empfangsvorrichtung von der Energieversorgungseinheit weiter geleitet werden. Über die drahtlose Datenverbindung kann auch der Ladezustand des Energiespeichers abgefragt werden und beispielsweise auf einem Display des Flurförderzeugs angezeigt werden über eine Fahrzeugsteuerung des Flurförderzeugs oder auf einem eigenen Terminal.

Es können ein oder zwei Schleifkontakte für Stromschienen an einem Hubmast des Flurförderzeugs vorhanden sind, über die der Energiespeicher der Energieversorgungseinheit geladen werden kann.

Eine solche Lademöglichkeit kann einpolig sein, wenn das Fahrzeug als Masse genutzt wird oder zweipolig. Bevorzugt sind an einem Mastprofil des Hubmastes dabei zwei Stromschienen so angebracht, dass die Schleifkontakte sich in einem Bereich mit angehobener Lastgabel befinden, insbesondere vorschriftsgemäß bei ca. 300 mm angehobener Lastgabel. Die Schleifkontakte können dabei direkt an der Energieversorgungseinheit mit einem entsprechend gestalteten Halter angeordnet sein, aber auch an dem Gabelträger montiert werden. Eine Ladesteuerung in der Energieversorgungseinheit sorgt dann im Bereich angehobener Lastgabeln, falls erforderlich, für ein Laden des Energiespeichers. In diesem Fall kann der Energiespeicher so ausgelegt werden, dass er lediglich als Pufferakku dient und ein etwaiger Wechsel nicht erforderlich ist. Es kann ein Dauerbetrieb erfolgen.

Weitere Vorteile und Einzelheiten der Erfindung werden anhand der in den schematischen Figuren dargestellten Ausführungsbeispiele näher erläutert. Hierbei zeigt
- Fig. 1: schematisch eine Lastaufnahmevorrichtung an einem Hubmast mit einer erfindungsgemäßen Energieversorgungseinheit,
- Fig. 2: die Energieversorgungseinheit in einer Seitenansicht,
- Fig. 3: die Energieversorgungseinheit in einer weiteren Seitenansicht und
- Fig. 4: die Energieversorgungseinheit in einer Frontansicht.

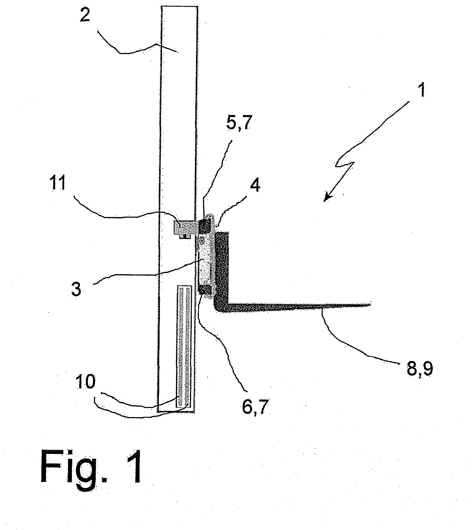

Die Fig. 1 zeigt schematisch eine Lastaufnahmevorrichtung 1 an einem Hubmast 2 mit einer erfindungsgemäßen Energieversorgungseinheit 3, die über ein Trägerelement 4 an einem oberen Querträger 5 und einem unteren Querträger 6, die zusammen den Gabelträger 7 bilden, festgespannt ist. Der Gabelträger 7 und eine Gabelzinke 8 als Teil einer Lastgabel 9 bilden zusammen die Lastaufnahmevorrichtung 1. An dem Hubmast 2 sind zwei Stromschienen 10 angeordnet, mit denen die Energieversorgungseinheit 3 bei einer geeigneten Hubhöhe der Lastgabel 9, in dem vorliegenden Beispiel von 300 mm, über Schleifkontakte 11 elektrischen Kontakt hat. Über die Schleifkontakte 11 und die Stromschienen 10 kann dann bei Bedarf ein Energiespeicher der Energieversorgungseinheit 3 nachgeladen werden.

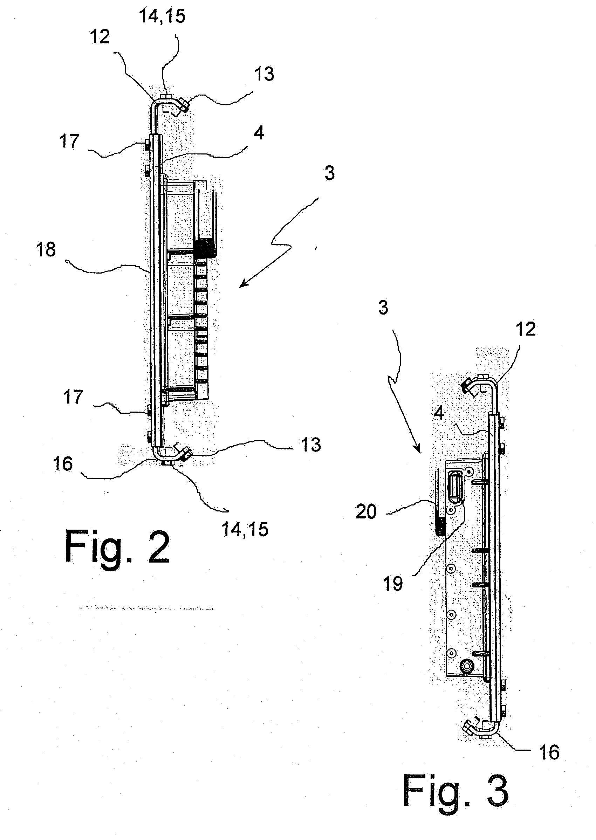

Die Fig. 2 zeigt die Energieversorgungseinheit 3 in einer Seitenansicht. Das Trägerelement 4 weist einen oberen Hakenbereich 12 auf, mit dem es um den oberen Querträger 5 des Gabelträgers 7 herum greifen kann. Durch Spannschrauben 13 kann die Energieversorgungseinheit 3 an dem oberen Querträger 5 fixiert werden. Weitere Schrauben 14 dienen als Arretierungselemente 15, um die Energieversorgungseinheit 3 in den Einrastpunkten der Gabelzinken in dem oberen Querträger 5 zu halten. Ebenso weist ein unterer Hakenbereich 16 Spannschrauben 13 sowie weitere Schrauben 14 als Arretierungselemente 15 auf. Die Länge des Trägerelements 4 zwischen dem oberen Hakenbereich 12 und dem unteren Hakenbereich 16 kann eingestellt werden und somit an verschiedene Arten von Flurförderzeugen leicht angepasst werden. Hieraus ergibt sich eine leichte Nachrüstbarkeit. Die Längenverstellung des Trägerelements 4 kann über Schrauben 17 festgeklemmt werden. Auf dem Trägerelement 4 befindet sich noch eine Schutzplatte 18, die in der Einbauposition der Last zugewandt ist.

Die Fig. 3 zeigt die Energieversorgungseinheit 3 in einer weiteren Seitenansicht von der gegenüberliegenden Seite, mit dem Trägerelement 4, dem oberen Hakenbereich 12 und dem unteren Hakenbereich 16. Über einen Steckverbinder 19 können Zusatzgeräte angeschlossen werden, die eine Stromversorgung erhalten und denen eine Datenverbindung mit einem Datenbus zur Verfügung steht. Die Energieversorgungseinheit 3 wiederum kann über eine Antenne 20 eine drahtlose Datenverbindung zu einem Steuergerät des Flurförderzeugs selbst herstellen oder auch zu Drittgeräten wie beispielsweise einem Anzeigegerät in einer Fahrerkabine, das von dem Flurförderzeug unabhängig ist. Damit ergibt sich eine sehr flexible Nachrüstmöglichkeit, da unter Umständen überhaupt nicht auf Systeme des Flurförderzeugs zurückgegriffen werden muss und Zusatzgeräte im Bereich der Lastaufnahmevorrichtung nachgerüstet werden können, so dass diese mit Strom versorgt werden und zugleich über ein weiteres Anzeigegerät, wie beispielsweise einen nachgerüsteten Bildschirm im Bereich der Fahrerkabine, bedient werden können.

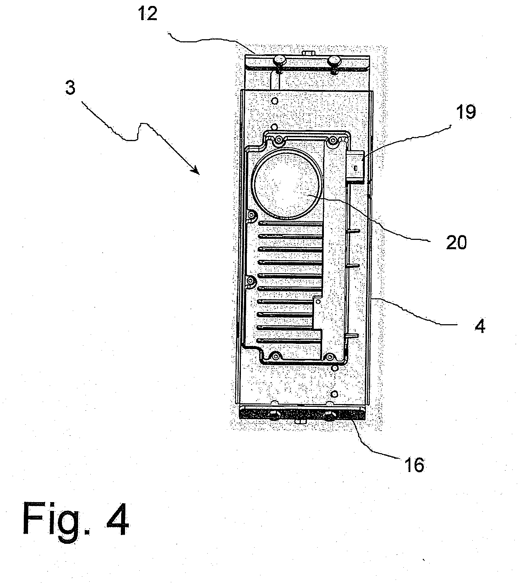

Die Fig. 4 zeigt die Energieversorgungseinheit 3 in einer Frontansicht mit dem Trägerelement 4, dem oberen Hakenbereich 12 und dem unteren Hakenbereich 16. In der Montageposition ist diese Seite bei Verwendung beispielsweise bei einem üblichen Gegengewichtsgabelstapler aber auch bei einem Schubmaststapler, einer Fahrerkabine zugewandt und die Antenne 20 hat somit freie Funkverbindung zu in der Fahrerkabine angeordneten kommunizierenden Geräten, wie etwa einem zusätzlichen Bildschirm. Seitlich der Antenne 20 ist der Steckverbinder 19 angeordnet.

## Patentansprüche

1. Energieversorgungseinheit eines Zusatzgerätes an einer Lastaufnahmevorrichtung (1) eines Flurförderzeugs, wobei die Lastaufnahmevorrichtung (1) einen Gabelträger (7) mit einem oberen Querträger (5) zum Einhängen von Gabelzinken (8) umfasst und die Energieversorgungseinheit (3) einen Energiespeicher an einem Trägerelement (4) aufweist,
wobei das Trägerelement (4) an einem oberen Ende einen ersten Hakenbereich (12) aufweist, mit dem es an dem oberen Querträger (5) eingehängt werden kann,
**dadurch gekennzeichnet, dass**
das Trägerelement (4) eine, in der Einbauposition einer Last zugewandte, Schutzplatte (18) aufweist, zum Verhindern, dass die Energieversorgungseinheit (3) oder Teile einer Elektronik durch die Last beschädigt werden.

2. Energieversorgungseinheit nach Anspruch 1,
**dadurch gekennzeichnet,**
**dass** das Trägerelement (4) an seinem unteren Ende einen zweiten Hakenbereich (16) aufweist, mit dem es in einem unteren Querträger (6) des Gabelträgers (7) eingespannt werden kann.

3. Energieversorgungseinheit nach Anspruch 2,
**dadurch gekennzeichnet,**
**dass** das Trägerelement (4) in seiner Länge zwischen erstem Hakenbereich (12) und zweiten Hakenbereich (16) eingestellt werden kann.

4. Energieversorgungseinheit nach einem der Ansprüche 1 bis 3,
**dadurch gekennzeichnet,**
**dass** die Energieversorgungseinheit (3) mit dem Trägerelement (4) ungefähr die Breite des ersten Querträgers (5) einnimmt.

5. Energieversorgungseinheit nach einem der Ansprüche 1 bis 4,
**dadurch gekennzeichnet,**
**dass** im ersten Hakenbereich (12) und/oder zweiten Hakenbereich (16) Spannschrauben (13) angeordnet sind.

6. Energieversorgungseinheit nach einem der Ansprüche 1 bis 5,
**dadurch gekennzeichnet,**
**dass** im ersten Hakenbereich (12) und/oder zweiten Hakenbereich (16) Arretierungselemente (15) für Einrastpunkte der Gabelzinken (8) in dem Querträger (5) vorgesehen sind, insbesondere Schrauben (14).

7. Energieversorgungseinheit nach einem der Ansprüche 1 bis 6,
**dadurch gekennzeichnet,**
**dass** auf der dem Trägerelement (4) abgewandten Seite Steckverbindungen (19) angeordnet sind.

8. Energieversorgungseinheit nach einem der Ansprüche 1 bis 7,
**dadurch gekennzeichnet,**
**dass** die Energieversorgungseinheit (3) eine Sende- und Empfangsvorrichtung für eine drahtlose Datenverbindung aufweist und ein Datenbussystem für Zusatzgeräte.

9. Energieversorgungseinheit nach einem der Ansprüche 1 bis 8,
**dadurch gekennzeichnet,**
**dass** die Energieversorgungseinheit (3) an einem Hubmast (2) des Flurförderzeugs anbringbare Stromschienen (10), über die der Energiespeicher der Energieversorgungseinheit (3) geladen werden kann, und ein oder zwei Schleifkontakte (11) für die Stromschienen (10) umfasst.

## Claims

1. Energy supply unit of an additional device on load bearing equipment (1) of an industrial truck, wherein the load bearing equipment (1) comprises a fork carrier (7) having an upper crossmember (5) for hooking in fork prongs (8), and the energy supply unit (3) has an energy store on a carrier element (4),
wherein the carrier element (4) has a first hook area (12) at an upper end, with which it can be hung on the upper crossmember (5),
**characterized in that**
the carrier element (4) has a protective plate (18) that faces a load in the installed position in order to prevent the energy supply unit (3) or parts of an electronic unit being damaged by the load.

2. Energy supply unit according to Claim 1,
**characterized in that**
the carrier element (4) has a second hook area (16) at its lower end, with which it can be clamped in a lower crossmember (6) of the fork carrier (7).

3. Energy supply unit according to Claim 2,
**characterized in that**
the length of the carrier element (4) between the first hook area (12) and second hook area (16) can be adjusted.

4. Energy supply unit according to one of Claims 1 to 3,
**characterized in that**
the energy supply unit (3) with the carrier element (4) occupies approximately the width of the first crossmember (5) .

5. Energy supply unit according to one of Claims 1 to 4,
**characterized in that**
clamping screws (13) are arranged in the first hook area (12) and/or second hook area (16).

6. Energy supply unit according to one of Claims 1 to 5,
**characterized in that**
locking elements (15), in particular screws (14), for latching points of the fork tines (8) in the crossmember (5) are provided in the first hook area (12) and/or second hook area (16).

7. Energy supply unit according to one of Claims 1 to 6,
**characterized in that**
plug-in connections (19) are arranged on the side facing away from the carrier element (4).

8. Energy supply unit according to one of Claims 1 to 7,
**characterized in that**
the energy supply unit (3) has a transmitting and receiving device for a wire-free data link and a data bus system for additional devices.

9. Energy supply unit according to one of Claims 1 to 8,
**characterized in that**
the energy supply unit (3) comprises busbars (10) which can be attached to a lifting mast (2) of the industrial truck and via which the energy store of the energy supply unit (3) can be charged, and one or more sliding contacts (11) for the busbars (10).

## Revendications

1. Unité d'alimentation en énergie d'un appareil auxiliaire sur un dispositif de réception de charge (1) d'un chariot de manutention, le dispositif de réception de charge (1) présentant un tablier porte-fourche (7) doté d'une traverse supérieure (5) pour accrocher des bras de fourche (8), et l'unité d'alimentation en énergie (3) présente un accumulateur d'énergie sur un élément de support (4),
l'élément de support (4) présentant à une extrémité supérieure une première zone de crochet (12) par laquelle il peut être accroché à la traverse supérieure (5),
**caractérisée en ce que** l'élément de support (4) présente une plaque de protection (18) tournée vers une charge dans la position installée afin d'empêcher que la charge n'endommage l'unité d'alimentation en énergie (3) ou des pièces d'un système électronique.

2. Unité d'alimentation en énergie selon la revendication 1, **caractérisée en ce que** l'élément de support (4) présente à son extrémité inférieure une deuxième zone de crochet (16) par laquelle il peut être serré dans une traverse inférieure (6) du tablier porte-fourche (7).

3. Unité d'alimentation en énergie selon la revendication 2, **caractérisée en ce que** l'élément de support (4) peut être réglé en longueur entre la première zone de crochet (12) et la deuxième zone de crochet (16).

4. Unité d'alimentation en énergie selon l'une quelconque des revendications 1 à 3, **caractérisée en ce que** l'unité d'alimentation en énergie (3) avec l'élément de support (4) occupe approximativement la largeur de la première traverse (5).

5. Unité d'alimentation en énergie selon l'une quelconque des revendications 1 à 4, **caractérisée en ce que** des vis de serrage (13) sont disposées dans la première zone de crochet (12) et/ou la deuxième zone de crochet (16).

6. Unité d'alimentation en énergie selon l'une quelconque des revendications 1 à 5, **caractérisée en ce que** dans la première zone de crochet (12) et/ou la deuxième zone de crochet (16), des éléments d'arrêt (15) pour des points d'ancrage des bras de fourche (8) dans la traverse (5) sont prévus, en particulier des vis (14).

7. Unité d'alimentation en énergie selon l'une quelconque des revendications 1 à 6, **caractérisée en ce que** des fiches de raccordement (19) sont disposées sur le côté détourné de l'élément de support (4).

8. Unité d'alimentation en énergie selon l'une quelconque des revendications 1 à 7, **caractérisée en ce que** l'unité d'alimentation en énergie (3) présente un dispositif d'émission et de réception pour une liaison de données sans fil et un système de bus de données pour des appareils auxiliaires.

9. Unité d'alimentation en énergie selon l'une quelconque des revendications 1 à 8, **caractérisée en ce que** l'unité d'alimentation en énergie (3) comprend des barres conductrices (10) pouvant être montées sur un mât de levage (2) du chariot de manutention et par lesquelles l'accumulateur d'énergie de l'unité d'alimentation en énergie (3) peut être chargé, et un ou deux contacts par frottement (11) pour les barres conductrices (10).
